# EUROPEAN PATENT SPECIFICATION

(11) **EP 0 922 121 B1**
(45) Date of publication and mention of the grant of the patent: **17.05.2000**
(21) Application number: 96932943.2
(22) Date of filing: 30.08.1996
(51) Int. Cl.: C22B 34/12

(54) **PROCESS FOR REDUCING CO AND COS EMISSIONS FROM A FLUIDIZED BED REACTOR FOR CHLORINATING TITANIUM CONTAINING MATERIAL**
VERFAHREN ZUR VERMINDERUNG DES CO- UND COS-SCHADSTOFFAUSSTOSSES BEI DER CHLORIERUNG TITANHALTIGER STOFFE IN EINEM WIRBELSCHICHTREAKTOR
PROCEDE DE REDUCTION DES EMISSIONS DE CO ET COS PROVENANT D'UN REACTEUR A LIT FLUIDISE EN VUE DE CHLORURER UNE SUBSTANCE CONTENANT DU TITANE

(43) Date of publication of application: 16.06.1999
(73) Proprietor: E.I. DU PONT DE NEMOURS AND COMPANY, Wilmington Delaware 19898 (US)
(72) Inventor: REIS, Paul, G., Wilmington, DE 19808-3019 (US); PELL, Melvyn, B., Wilmington, DE 19810-2249 (US); LOW, David, N., Wilmington, DE 19803-5111 (US); GLAESER, Hans, H., Wilmington, DE 19807-1243 (US)
(74) Representative: Matthews, Derek Peter
(86) International application number: US9613979
(87) International publication number: WO9808993

(56) References cited:
- US-A- 2 446 181
- US-A- 2 701 179
- US-A- 2 790 703
- US-A- 3 526 477
- US-A- 3 591 333
- US-A- 3 865 920
- US-A- 3 870 506
- US-A- 3 883 636
- US-A- 4 277 458
- US-A- 4 961 911

## Description

### BACKGROUND OF THE INVENTION:

This invention relates to a process for reducing CO and COS emissions from a fluidized bed reactor for chlorinating titanium containing material.

In such process, chlorine, particulate coke, and particulate titanium bearing material are fed to a fluidized bed reactor under conditions that chlorinate the titanium and many of the other metallic impurities. Gaseous titanium tetrachloride, other metallic chlorides such as iron chloride, CO, COS, CO₂, and other gaseous products exit the fluidized bed reactor. The gaseous titanium tetrachloride produced can then be separated from the other metal chlorides and impurities and oxidized to titanium dioxide, which is useful as a white pigment, or further processed to produce titanium metal.

It would be desirable to reduce the amount of COS and CO emitted from the fluidized bed reactor because environmental requirements often restrict such materials to a low level. Emissions of COS and CO are often particularly a problem when the reactor is operated in the ferrous mode, i.e., at least 50 percent by volume of the iron chloride evolved from the fluidized bed reactor is ferrous chloride.

The following information is disclosed which may be of interest to this invention:

Reis, U.S. Patent 4,961,911 discloses a process for reducing CO emissions from a fluidized bed reactor for chlorinating titanium containing material. The process consists of introducing chlorine above the surface of the fluidized bed while it is operated in the ferrous mode.

U.S. Patents 2,790,703 and 3,526,477 disclose processes for chlorinating titanium containing material in a fluidized bed reactor. It is stated that titanium tetrachloride can be used to cool the reaction products from the fluidized bed.

U.S. Patents 3,883,636 and 3,591,333 also disclose processes for chlorinating titanium containing material in a fluidized bed reactor. The efficiency of chlorination is said to be improved by conducting it in the presence of compounds of chromium, lanthanum, vanadium, magnesium, calcium, strontium, barium, cadmium, and mixtures thereof.

U.S. Patent 5,585,078 (published after the filing date of the application) discloses the addition of oxygen to a fluidized bed containing ilmenite ore and charcoal. Chlorine is fed to convert iron values in the ore to ferrous chloride. The oxygen reacts with excess carbon to help heat the fluidized bed.

US-A-3 865 920 discloses a process for producing rutile titanium dioxide and gaseous iron chlorides wherein a fluidized bed of titaniferous ore mixed with coke is contacted with chlorine. The produced iron chlorides are contacted with oxygen in a chamber above the fluidized bed to form a partially oxidized mixture of iron chloride, iron oxide, oxygen and chlorine.

### SUMMARY OF THE INVENTION:

The present invention provides a process for producing TiO₂ comprising chlorinating titanium containing material in a fluidized bed reactor which evolves gaseous material including CO, COS, TiCl₄, and iron chloride wherein at least 50 percent by volume of the iron chloride is ferrous chloride, and other metal chlorides, which are withdrawn through one or more flues; subsequently separating the TiCl₄ from the metal chlorides; and then oxidizing the separated TiCl₄ to form TiO₂, characterized in that an oxygen containing gas is introduced into at least one location downstream of the surface of the fluidized bed, as measured in its static condition, said oxygen containing gas being introduced in an amount sufficient to convert at least some of the COS and CO to CO2 and SO₂, thereby reducing CO and COS emissions.

### DETAILED DESCRIPTION OF THE INVENTION:

The process for chlorinating titanium containing material in a fluidized bed reactor is known. Suitable processes are disclosed in the following U.S. Patents: 2,701,179, 3,883,636, 3,591,333, and 2,446,181, which are hereby incorporated by reference.

In such process, particulate carbonaceous material, particulate titanium-bearing material, and chlorine are fed to a suitable reactor, and a suitable reaction temperature, pressure, and flow rates are maintained to sustain the fluidized bed. Gaseous titanium tetrachloride and other metal chlorides are discharged from the reactor chamber. The gaseous titanium tetrachloride so produced can be separated from the other metal chlorides and used to produce titanium dioxide pigment or titanium metal.

Often, the fluidized bed will have conditions and specifications as follows: reaction temperature of about 700-1400°C, pressure of about 1.5-3 atmospheres, reactor size of about 6-25 feet (1.8-7.6 meters) in diameter with multiple chlorine jets in or near the base, reactor superficial velocity of about 0.6-1.5 feet (0.15 to 0.46 meters) per second, and a static bed depth of about 6-25 feet (1.8-7.6 meters). Typically, the titanium-containing material initially fed has a mean particle size of about 100-3000 microns in diameter. Preferably, the chlorine jets will be located below the surface of the bed, as measured in its static condition, and within about 0-10 feet (3 meters), and most preferably about 0-5 feet (1.5 meters) of the base of the reactor. A most preferred location for the jets is the base of the reactor.

Preferably, the carbonaceous material is coke. Especially preferred is coke or calcined coke that is derived from petroleum or coal or mixtures of such cokes.

The titanium containing material can be any suitable titanium source material such as titanium containing ores including rutile, ilmenite or anatase ore: beneficiates thereof; titanium containing by-products or slags; and mixtures thereof.

Iron or iron in the form of compounds or complexes (hereinafter collectively referred to as "iron material") is often present in titanium containing materials that are chlorinated in fluidized bed reactors. Often such iron material will be present in an amount of about 0.5-50 percent by weight. A major amount of the iron material typically is present as iron oxide.

In such fluidized bed reactors, the iron material in the titanium containing material typically reacts to form iron chloride, which can be present in the form of ferrous chloride or ferric chloride. While the process of this invention can operate when ferric chloride ("ferric mode"), ferrous chloride ("ferrous mode") or both are produced, often COS and CO emissions are more abundant when operating in the ferrous mode. Thus, a preferred embodiment of this invention is when the fluidized bed reactor for chlorinating titanium bearing materials is operated in the ferrous mode. By this is meant that at least 50 percent by volume of the gaseous iron chloride exhausted from the fluidized bed reactor will be in the form of ferrous chloride. It often is desirable to operate in the ferrous mode, rather than the ferric mode, so that lesser amounts of costly chlorine are consumed. Means for favoring the reaction to the ferrous state are known, and most importantly involve not adding chlorine in substantial excess of that required to obtain the ferrous state.

The oxygen containing gas should be introduced at a location or locations which are downsstream of the surface of the bed, as measured in its static condition. A preferred embodiment of this invention is to introduce the oxygen containing gas within the reactor. The oxygen containing gases can also be introduced into the flue or flues exiting the reactor. An especially preferred embodiment is to introduce the oxygen containing gas within the reactor and about 0-5 feet (1.5 meters) downstream of the surface of the active fluidized bed. Often, the oxygen containing gas will introduced up to about 25 feet (7.6 meters), preferably up to about 15 feet (4.6 meters), and most preferably up to about 10 feet (3 meters) downstream of the surface of the bed as measured in the static condition.

To optimize mixing in the reactor and minimize erosion problems that might be caused by high volumes and high velocities of oxygen containing gas being injected, preferably the oxygen containing gas (1) will be injected from a plurality of inlets, and (2) will be injected at a suitable velocity.

The amount of oxygen containing gas added should be sufficient to cause the desired amount of COS and CO to convert to CO₂ and SO₂. Typically, the amount of oxygen containing gas used will be about the stoichiometric amount to convert the desired amount of COS and CO to CO₂ and SO₂. In practice, the amount of oxygen containing gas used often will be about 0.1-20 (0.5-98), preferably about 1-15 (4.9-73), and most preferably about 2-8 (9.8-39) pounds of oxygen containing gas per hour per square foot of the inside cross-sectional area of the reactor (kg/hr/square M), as measured at the largest inside diameter of the reactor. Also, preferably, the oxygen containing gas will be added until there is no longer any additional reduction in the amount of COS and CO exiting the fluidized bed reactor. This can be done by analyzing the gases exiting the fluidized bed reactor for the presence of COS and CO. In addition, or in the alternative, the gases exiting the fluidized bed reactor can be analyzed for increased levels of CO₂ and SO₂, which are believed to be the primary reaction products of COS and CO with the oxygen containing gas.

Air or oxygen are suitable oxygen containing gases. Other suitable oxygen containing gases are those which include, naturally or by addition, suitable amounts of air or oxygen; examples hereof include gas evolved from a process to oxidize TiCl₄ to TiO₂, nitrogen, and combustion gas. Mixtures of oxygen containing gas can be used. Typically, the oxygen containing gas will contain about 0.1-25 percent and preferably about 1-12 percent by volume oxygen. A typical analysis for gas exiting a process to oxidize TiCl₄ to TiO₂ is about 0.1-25 percent by volume oxygen, at least 50 percent by volume chlorine (typically 50-95 percent by volume chlorine), 20-40 percent by volume nitrogen, and about 0.1-15 percent other gases, e.g., CO, COS, CO₂, H₂O, and HCl.

Another advantage of the process of this invention is that it can be used both to reduce COS and CO emissions, and to control TiCl₄ production. For example, if the oxygen containing gas contains chlorine (e.g., it is the gas exiting a process for oxidizing TiCl₄ to TiO₂), then the amount of such gas and/or its chlorine content can be adjusted to regulate TiCl₄ production. Regulating TiCl₄ production can be important so that it can be matched to the available capacity to oxidize it to TiO₂.

The process of this invention can generally be used over the gas temperatures at which fluidized bed reactors are used to chlorinate titanium containing material, and over the range of temperatures of the hot gases in the exit flues from the reactor. Generally, this temperature will be about 700-1400°C, preferably about 800-1150°C, and more preferably about 850-1000°C. it should be noted that this temperature is measured above the surface of the active fluidized bed.

The following example illustrates the operation of the process of this invention.

### Example:

A vertical, cylindrical, fluidized bed reactor operating at about 950°C and operating in the ferrous mode was fed (a) with an ore blend containing about 74 percent TiO₂ and about 21.6 percent iron oxides, and (b) calcined petroleum coke. Gas consisting of about 70 percent by volume chlorine, 6 percent by volume oxygen, and other gases, primarily nitrogen and hydrogen chloride, was fed through multiple jets at the base of the reactor. The gas fluidized the reactor and was evolved from a process to oxidize TiCl₄ to TiO₂. Reaction products rose vertically and were discharged near the top of the reactor. Liquid TiCl₄ was fed above the surface of the bed (as measured in its static condition) to control the temperature of the bed.

Virgin chlorine was fed at a location which was about 9-12 feet (2.7-3.7 M) above and downstream of the surface of the bed, as measured in its static condition. The chlorine was fed at a rate of about 2.4 pounds/hour/square foot (11-7 kg/hr/square M) of inside cross-sectional area of the reactor, as measured at the largest inside diameter of the reactor. After the gases exiting the reactor were cooled to condense TiCl₄ and other metal chlorides, they contained 2.64 volume percent CO and 0.080 volume percent COS.

Then, the virgin chlorine fed above the bed was replaced with the fluidizing gas described in the first paragraph of this example. Such gas was fed at the same location above the bed and at a rate which introduced chlorine into the reactor in approximately the same amount as that of the virgin chlorine initially fed above the bed. To the extent such gas was fed above the bed, it was not fed below the bed. The gases leaving the chlorinator contained 1.67 volume percent CO and 0.006 volume percent COS. Thus, by switching to this oxygen containing gas, the CO emitted from the fluidized bed chlorinator was reduced by 36.7 percent, and the COS was reduced by 92.5 percent.

## Claims

1. A process for producing TiO₂ comprising chlorinating titanium containing material in a fluidized bed reactor which evolves gaseous material including CO, COS, TiCl₄, and iron chloride wherein at least 50 percent by volume of the iron chloride is ferrous chloride, and other metal chlorides, which are withdrawn through one or more flues; subsequently separating the TiCl₄ from the metal chlorides; and then oxidizing the separated TiCl₄ to form TiO₂, characterized in that an oxygen containing gas is introduced into at least one location downstream of the surface of the fluidized bed, as measured in its static condition, said oxygen containing gas being introduced in an amount sufficient to convert at least some of the COS and CO to CO2 and SO₂, thereby reducing CO and COS emissions.

2. The process of claim 1 wherein the oxygen containing gas is introduced within the reactor.

3. The process of claim 1 wherein the oxygen containing gas is introduced into the flue or flues exiting the reactor.

4. The process of claim 1 wherein the temperature of conversion is 700-1400 degrees C.

5. The process of claim 1 wherein the oxygen containing gas is evolved from a process to oxidize TiCl₄ to TiO₂, contains chlorine in the amount of at least 50 percent by volume, and contains oxygen in the amount of 0.1-25 percent by volume.

6. The process of claim 5 wherein additional oxygen is added to the oxygen containing gas before it is introduced into the fluidized bed reactor.

7. The process of claim 1 wherein the oxygen containing gas is (a) air, chlorine, nitrogen, combustion gas or mixtures thereof, and the oxygen is present therein in an amount of 0.1-25 percent by volume, (b) oxygen or (c) mixtures thereof.

8. The process of claim 1 wherein the oxygen containing gas is introduced at a location or locations which are up to 25 feet (7.6 meters) downstream from the surface of the bed, as measured in its static condition.

9. The process of claim 1 wherein the oxygen containing gas is introduced at a location or locations which are 0-5 feet (1.5 meters) downstream of the surface of the bed, as measured in its fluidized condition.

10. The process of any one of claims 1-9 wherein the oxygen containing gas is introduced through a plurality of inlets at a rate of 2-20 pounds per hour per square foot of the inside cross-sectional area of the reactor (9.8-98 kg/hr/M²), as measured at the largest inside diameter of the reactor.

11. The process of any one of claims 1-9 wherein the temperature of gas above the surface of the active fluidized bed is maintained at 800-1150°C. by introducing liquid TiCl₄ above the surface of the active fluidized bed.

12. The process of claim 1 wherein:
(a) the oxygen containing gas is evolved from a process to oxidize TiCl₄ to TiO₂, contains chlorine in the amount of at least 50 percent by volume, and contains oxygen in the amount of 0.1-25 percent by volume,
(b) the oxygen containing gas is introduced within the reactor through a plurality of inlets at a rate of 2-20 pounds per hour per square foot of inside diameter of the reactor (9.8-98 kg/hr/M²), and
(c) the temperature of the gas above the fluidized bed is maintained at 800-1150°C. by introducing liquid TiCl₄ above the surface bed.

13. The process of claim 12 wherein the oxygen containing gas is introduced at a location or locations which are up to 15 feet (4.6 meters) downstream of the surface of the bed as measured in its static condition.

14. The process of claim 5 wherein the amount of oxygen containing gas use, and/or its chlorine content, is adjusted to control the amount of TiCl₄ production.

## Patentansprüche

1. Verfahren zur Herstellung von TiO₂, umfassend das Chlorieren titanhaltiger Stoffe in einem Wirbelschichtreaktor, der gasförmige Stoffe, einschließlich CO, COS, TiCl₄ und Eisenchlorid, wobei mindestens 50 Volumenprozent des Eisenchlorids Ferrochlorid ist, sowie andere Metallchloride entwickelt, die durch einen oder mehrere Abzüge abgezogen werden; nachfolgend das Abtrennen des TiCl₄ von den Metallchloriden; und dann das Oxidieren des abgetrennten TiCl₄, um TiO₂ zu erzeugen, dadurch gekennzeichnet, daß ein sauerstoffhaltiges Gas an mindestens einer Stelle stromabwärts von der Oberfläche der Wirbelschicht, gemessen in ihrem statischen Zustand, eingeführt wird, wobei das sauerstoffhaltige Gas in einer Menge eingeführt wird, die ausreichend ist, um mindestens etwas von dem COS und CO in CO₂ und SO₂ umzuwandeln, wodurch der CO- und COS-Schadstoffausstoß vermindert wird.

2. Verfahren nach Anspruch 1, wobei das sauerstoffhaltige Gas innerhalb des Reaktors eingeführt wird.

3. Verfahren nach Anspruch 1, wobei das sauerstoffhaltige Gas in den Abzug oder die Abzüge, die aus dem Reaktor hinausgehen, eingeführt wird.

4. Verfahren nach Anspruch 1, wobei die Temperatur der Umwandlung 700-1400°C beträgt.

5. Verfahren nach Anspruch 1, wobei das sauerstoffhaltige Gas von einem Verfahren zum Oxidieren von TiCl₄ zu TiO₂ entwickelt wird, Chlor in dem Anteil von mindestens 50 Volumenprozent enthält und Sauerstoff in dem Anteil von 0,1-25 Volumenprozent enthält.

6. Verfahren nach Anspruch 5, wobei zusätzlicher Sauerstoff zu dem sauerstoffhaltigen Gas hinzugegeben wird, bevor es in den Wirbelschichtreaktor eingeführt wird.

7. Verfahren nach Anspruch 1, wobei das sauerstoffhaltige Gas aus (a) Luft, Chlor, Stickstoff, Verbrennungsgas oder Gemischen davon, und der Sauerstoff darin in einem Anteil von 0,1 bis 25 Volumenprozent vorhanden ist, (b) Sauerstoff oder (c) Gemischen davon besteht.

8. Verfahren nach Anspruch 1, wobei das sauerstoffhaltige Gas an einer Stelle oder an Stellen eingeführt wird, die sich bis zu 25 Fuß (7,6 Meter) stromabwärts von der Oberfläche der Bettes, gemessen in seinem statischen Zustand, befinden.

9. Verfahren nach Anspruch 1, wobei das sauerstoffhaltige Gas an einer Stelle oder an Stellen eingeführt wird, die sich 0-5 Fuß (1,5 Meter) stromabwärts von der Oberfläche des Bettes, gemessen in seinem aufgewirbelten Zustand, befinden.

10. Verfahren nach einem der Ansprüche 1-9, wobei das sauerstoffhaltige Gas durch eine Mehrzahl von Einlässen mit einer Geschwindigkeit von 2-20 Pound pro Stunde pro Quadratfuß der inneren Querschnittsfläche des Reaktors (9,8-98 kg/h/m²), gemessen an dem größten Innendurchmesser des Reaktors, eingeführt wird.

11. Verfahren nach einem der Ansprüche 1-9, wobei die Temperatur des Gases oberhalb der Oberfläche der aktiven Wirbelschicht bei 800-1150°C gehalten wird, indem flüssiges TiCl₄ oberhalb der Oberfläche der aktiven Wirbelschicht eingeführt wird.

12. Verfahren nach Anspruch 1, wobei:
(a) das sauerstoffhaltige Gas von einem Verfahren zum Oxidieren von TiCl₄ zu TiO₂ entwickelt wird, Chor in dem Anteil von mindestens 50 Volumenprozent enthält und Sauerstoff in dem Anteil von 0,1-25 Volumenprozent enthält,
(b) das sauerstoffhaltige Gas innerhalb des Reaktors durch eine Mehrzahl von Einlässen mit einer Geschwindigkeit von 2-20 Pound pro Stunde pro Quadratfuß des Innendurchmessers des Reaktors (9,8-98 kg/h/m²) eingeführt wird und
(c) die Temperatur des Gases oberhalb der Wirbelschicht bei 800-1150°C gehalten wird, indem flüssiges TiCl₄ oberhalb der Oberfläche des Bettes eingeführt wird.

13. Verfahren nach Anspruch 12, wobei das sauerstoffhaltige Gas an einer Stelle oder an Stellen eingeführt wird, die sich bis zu 15 Fuß (4,6 Meter) stromabwärts von der Oberfläche des Bettes, gemessen in seinem statischen Zustand, befinden.

14. Verfahren nach Anspruch 5, wobei die verwendete Menge des sauerstoffhaltigen Gases und/oder sein Chlorgehalt angepaßt wird, um die Menge der TiCl₄-Herstellung zu steuern.

## Revendications

1. Procédé pour la production de TiO₂ comprenant la chloruration d'une substance contenant du titane dans un réacteur à lit fluidisé qui dégage une substance gazeuse renfermant CO, COS, TiCl₄ et du chlorure de fer, dans lequel au moins 50 pour-cent en volume du chlorure de fer est du chlorure ferreux, et d'autres chlorures métalliques, qui sont retirés par un ou plusieurs tuyaux; la séparation ultérieure de TiCl₄ à partir des chlorures métalliques; et ensuite l'oxydation du TiCl₄ séparé pour former TiO₂,
caractérisé en ce qu'un gaz contenant de l'oxygène est introduit dans au moins un endroit en aval de la surface du lit fluidisé, ce gaz étant mesuré dans son état statique, ledit gaz contenant de l'oxygène étant introduit en une quantité suffisante pour convertir au moins une partie des COS et CO en CO₂ et SO₂, réduisant ainsi les émissions de CO et COS.

2. Procédé suivant la revendication 1, dans lequel le gaz contenant de l'oxygène est introduit dans le réacteur.

3. Procédé suivant la revendication 1, dans lequel le gaz contenant de l'oxygène est introduit dans le ou les tuyaux sortant du réacteur.

4. Procédé suivant la revendication 1, dans lequel la température de conversion est de 700-1400 degrés C.

5. Procédé suivant la revendication 1, dans lequel le gaz contenant de l'oxygène est dégagé à partir d'un procédé d'oxydation de TiCl₄ en TiO₂, contient du chlore dans la quantité d'au moins 50 pour-cent en volume et contient de l'oxygène dans la quantité de 0,1-25 pour-cent en volume.

6. Procédé suivant la revendication 5, dans lequel une quantité supplémentaire d'oxygène est ajouté au gaz contenant de l'oxygène avant son introduction dans le réacteur à lit fluidisé.

7. Procédé suivant la revendication 1, dans lequel le gaz contenant de l'oxygène est (a) de l'air, du chlore, de l'azote, un gaz de combustion ou des mélanges de ceux-ci et dans lequel l'oxygène est présent dans ce gaz dans une quantité de 0,1-25 pour-cent en volume, (b) de l'oxygène ou (c) des mélanges de ceux-ci.

8. Procédé suivant la revendication 1, dans lequel le gaz contenant de l'oxygène est introduit à un endroit ou des endroits qui se situent jusqu'à 25 pieds (7,6 mètres) en aval de la surface du lit, ce gaz étant mesuré dans son état statique.

9. Procédé suivant la revendication 1, dans lequel le gaz contenant de l'oxygène est introduit à un endroit ou des endroits qui se situent à 0-5 pieds (1,5 mètres) en aval de la surface du lit, ce gaz étant mesuré dans son état fluidisé.

10. Procédé suivant l'une quelconque des revendications 1-9, dans lequel le gaz contenant de l'oxygène est introduit par une pluralité d'orifices d'entrée à une vitesse de 2-20 livres par heure par pied au carré de la surface de section transversale intérieure du réacteur (9,8-98 kg/h/m²), mesurée au niveau du diamètre interne le plus large du réacteur.

11. Procédé suivant l'une quelconque des revendications 1-9, dans lequel la température du gaz au-dessus de la surface du lit fluidisé actif est maintenue à 800-1150°C en introduisant du TiCl₄ liquide au-dessus de la surface du lit fluidisé actif.

12. Procédé suivant la revendication 1, dans lequel:
(a) le gaz contenant de l'oxygène est dégagé à partir d'un procédé d'oxydation de TiCI₄ en TiO₂, contient du chlore dans la quantité d'au moins 50 pour-cent en volume et contient de l'oxygène dans la quantité de 0,1-25 pour-cent en volume,
(b) le gaz contenant de l'oxygène est introduit dans le réacteur par une pluralité d'orifices d'entrée à une vitesse de 2-20 livres par heure par pied au carré du diamètre intérieur du réacteur (9,8-98 kg/h/m²), et
(c) la température du gaz au-dessus du lit fluidisé est maintenue à 800-1150°C en introduisant du TiCl₄ liquide au-dessus de la surface du lit.

13. Procédé suivant la revendication 12, dans lequel le gaz contenant de l'oxygène est introduit à un endroit ou des endroits qui se situent jusqu'à 15 pieds (4,6 mètres) en aval de la surface du lit, ce gaz étant mesuré dans son état statique.

14. Procédé suivant la revendication 5, dans lequel la quantité d'utilisation de gaz contenant de l'oxygène, et/ou sa teneur en chlore, sont ajustées pour réguler la quantité de production de TiCl₄.
